# EUROPEAN PATENT APPLICATION

(11) **EP 4 238 933 A1**
(43) Date of publication of application: **06.09.2023**
(21) Application number: 22160045.5
(22) Date of filing: 03.03.2022
(51) Int. Cl.: C01B 21/26, B01D 53/56, C01B 21/28, C01B 21/38

(54) **MONO PRESSURE SYSTEM FOR PRODUCING NITRIC ACID AND METHOD OF OPERATING THEREOF**

(71) Applicant: Yara International ASA, 0277 Oslo (NO)
(72) Inventor: VIGELAND, Bent, 3714 Skien (NO); ØIEN, Halvor, 3943 Porsgrunn (NO); BANASIAK, Krzysztof, 7018 Trondheim (NO); de Smet, Andre, 4535 JH Terneuzen (NL); FAUCONNIER, Peter, 1850 Grimbergen (BE)
(74) Representative: De Clercq & Partners

(57) **Abstract**

The present disclosure discloses a production plant for producing nitric acid at reduced power, the system derived from a state-of-the art mono pressure nitric acid plant characterised in that the system further comprises a first means for splitting (**55**) a tail gas stream into a first tail gas stream (**52**) in fluid communication with an oxygen-rich gas (**50**) and with compressed air (**34**) and a second tail gas stream (**74**), and/or a second means for splitting (**75**) a tail gas stream into a third tail gas stream (**76**) in fluid communication with an oxygen-rich gas (**50**) and with compressed air (**34**) and a fourth tail gas stream (**77**), means for pressurising a gas (**53**) downstream the absorption tower (**41**). The present production plant allows for reduction of power by the air compressor (**36**). The present disclosure further relates to a method for operating the system, to the use of the system of the disclosure for performing the method of the disclosure and to a method for revamping a state-of-the art mono pressure nitric acid plant into the system of the disclosure.

## Description

### Field

The present disclosure relates to the field of nitric acid production in a mono pressure plant.

### Introduction

Pure nitric acid is a clear, colorless liquid with a strong odor. Nitric acid is produced in large quantities principally by catalytic oxidation of ammonia (Ostwald process). Ammonia is converted to nitric acid in several stages. Ammonia is first oxidized in an ammonia burner on platinum gauzes (commonly called ammonia converter) or cobalt balls, producing nitric oxide (in this disclosure also called nitrogen monoxide (NO)) and water:

4 NH₃ (g) + 5 O₂ (g) → 4 NO (g) + 6 H₂O (g) (1)

The reaction product from (1), nitric oxide, following cooling, is then oxidized to nitrogen dioxide (NO₂) and further to dinitrogen tetroxide N₂O₄ (g) in an oxidation section:

2 NO (g) + O₂ (g) → 2 NO₂ (g) (2)

2 NO₂ (g) → N₂O₄ (g) (3)

Cooling of nitrogen oxide gases is accomplished first through the use of a waste heat recovery system recovering the heat from the conversion of ammonia into nitric oxide, then through the use of a cooler condenser in which condensed nitric acid is separated from nitric oxide, nitrogen dioxide and dinitrogen tetroxide and nitric acid gases, collectively called NOₓ gases, and finally by heating the tail gas released at the outlet of the absorption tower in which the NOₓ gases are absorbed.

By absorption in water, nitrogen dioxide and dinitrogen tetroxide are converted to nitric acid and nitric oxide:

3 NO₂ (g) + H₂O (I) → 2 HNO₃(aq) + NO(g) (4)

3 N₂O₄ (g) + 2 H₂O (I) → 4 HNO₃ (aq) + 2 NO (g) (5)

Weak nitric acid which is up to 68 % (azeotrope) is obtained. Through a rectification process the concentration of nitric acid can be increased up to 99 % concentrated nitric acid. The total reaction is given by the following formula:

NH₃ + 2 O₂ → HNO₃ + H₂O (6)

The main process units in a nitric acid production plant, include an ammonia converter (conversion of ammonia into nitric oxides using oxygen over a suitable catalyst), an oxidation section (conversion of nitric oxide into nitrogen dioxide and nitrogen tetroxide), an absorber unit (for the absorption of NOₓ gases into water) and a bleacher unit (removal of unreacted dissolved gases, containing in particular NOₓ and gases, from the aqueous nitric acid solution, which give it its typical brownish color).

The process for the production of nitric acid can be differentiated into a mono-pressure (single-pressure) and dual pressure (split-pressure) process.

In a mono-pressure process, the converter and the absorber unit operate at roughly the same working pressure. Such mono-pressure process generally includes low-pressure (2 to 6 bara) and high-pressure (from above 6 to 16 bara, in particular 9 to 16 bara) processes.

The drive power for the air compressor typically originates from a tail-gas turbine and a steam turbine or electric motor. Accordingly, the compressor train of mono pressure nitric acid production plant typically comprises an air compressor, a tail-gas turbine, and a steam turbine or electric motor.

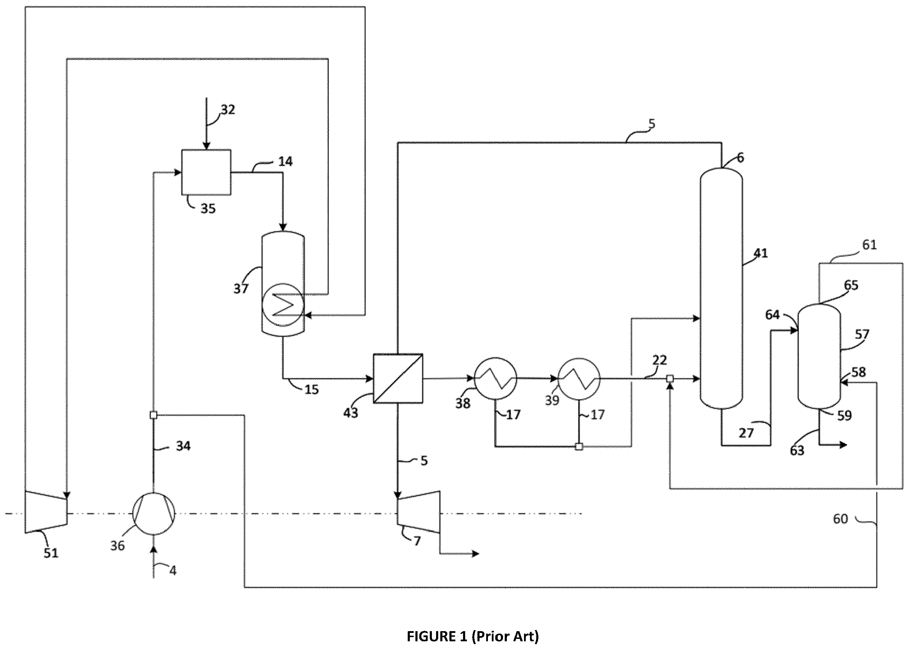

More in detail, referring to Figure 1, a mono pressure plant and process according to the prior art works as follows. Gaseous ammonia **32,** optionally pre-heated in a pre-heater unit (not shown) is mixed with compressed air **34** pressurised using an air compressor **36**, in a mixing apparatus **35**, and the resulting ammonia/(oxygen-enriched) air mixture **14** is fed to an ammonia converter **37**, where ammonia is oxidized over a suitable catalyst, thus obtaining a NOₓ gas/steam mixture **15**, comprising water and nitric oxide (NO). The heat of the mixture coming out of the ammonia converter is recovered, after which the NOₓ gas/stream mixture is subsequently cooled down in a gas cooler/condenser **38** to a temperature where the water condenses, and an aqueous diluted nitric acid mixture **17** is separated from a gaseous NOₓ stream **22**. The gaseous NOₓ stream is further oxidized to further convert the NO to NO₂ and N₂O₄ to separate out another aqueous diluted nitric acid mixture **17** which is directed to an absorption tower **41**, commonly called absorption tower. On the other end, the gaseous NOₓ stream **22** is sent to the absorber unit **41** too. Inside the absorber unit **41**, the NOₓ gas reacts with water to produce the tail gas **5** and a stream of raw nitric acid **27** also containing residual NOₓ gas, which is fed to a bleacher **57**. The residual NOₓ gas in the raw nitric acid stream **27** is then stripped out with a gaseous medium **60** such as an oxygen-containing gas or air, inside the bleacher **57**; the bleacher unit is generally operated at about the same pressure as the ammonia converter. The drive power for both the air compressor **36** originates from a tail gas expander **7** and a steam turbine **51** or electric motor (not shown). The tail gas **5** exchanges heat with the NOₓ gas/steam mixture **15** in the tail gas heater **43** and is expanded in the tail gas expander **7**.

The air used for the oxidation of ammonia is commonly denoted as primary air; the air used as stripping medium in the bleacher unit is commonly denoted as secondary air. According to the prior art, the revamping of the nitric acid production plants to increase its capacity is commonly based on increasing the amount of primary air to the reactor, which leads to a proportional increase of the amount of nitric acid produced.

The increase of the amount of primary air in the reactor entails the installation of a new air compressor or the revamping of the existing one. This revamping has significant drawbacks. First of all, it entails elevated costs for the modification or replacement of the existing equipment, i.e. the air compressor and the corresponding turbines and electrical motor. In addition, the revamping of the equipment is also technically demanding, leading to long plant downtime.

Another problem related to nitric acid production plants is the high amount of energy required in order to operate the air compressor. Consequently, a high amount of energy is required to achieve the targeted nitric acid production throughput.

A goal of the present invention, therefore, is to provide a system and a method for operating the system which allows for the reduction or even suppression of power required to operate the air compressor in a mono nitric acid plant.

### Background Prior Art

In CN110540178A (China Chengda Engineering Co Ltd, 2019), process for producing nitric acid is disclosed. Nitric acid is produced by a medium pressure method, which is characterized in that it comprises the following steps: the ammonia oxidation and absorption pressure is 0.5-0.6 MPa; enabling the tail gas leaving the absorption tower to pass through a carbon molecular sieve Temperature Swing Adsorption (TSA) treatment device to reduce the content of nitrogen oxides in the tail gas to be less than 100mg/Nm³; the process air of the air compressor is used as the regeneration desorption gas of the carbon molecular sieve temperature swing adsorption treatment device, and the regeneration desorption gas containing the nitrogen oxide can be returned to the ammonia oxidation reactor for reuse; adding a layer of N₂O decomposition catalyst in the oxidation reactor to reduce the content of N₂O to 50-100 ppm through reaction; the nitric acid bleaching tower is arranged at the bottom of the absorption tower, and the two towers are integrated, so that the process flow is shortened, and the equipment investment is reduced. With regard to the amount of air being compressed by the air compressor, however, the same amount of air is to be compressed as would be in the absence of the TSA unit: in the presence of the TSA unit, the amount of air being compressed is initially split between the TSA unit and the ammonia oxidation reactor directly and, in the end, with the amount of compressed air leaving the TSA unit being directed also to the ammonia oxidation reactor, the total amount of air compressed by the air compressor ends up in the ammonia oxidation reactor.

In WO2018/162150A1 (Casale SA, 13 September 2018) a solution is proposed to overcome the revamping drawbacks. WO2018162150A1 discloses a dual pressure plant for the production of nitric acid comprising a reactor providing a gaseous effluent containing nitrogen oxides, an absorber unit in which nitrogen oxides react with water providing raw nitric acid and, the absorber unit operating at a pressure greater than the pressure of the reactor, a compressor elevating the pressure of the reactor effluent to the absorber unit pressure, the plant also comprising a first high-pressure (HP) bleacher unit and a second low-pressure (LP) bleacher unit, the first HP bleacher unit stripping with air the NOₓ gas from the output stream of the absorber unit, thus providing a partially stripped nitric acid stream and a nitrogen oxides-loaded air stream, the former being fed to the second LP-bleacher unit and the latter being recycled to the oxidation section, upstream of the NOₓ gas compressor.

A further air compressor is also provided, which supplies the first HP bleacher unit with air. Hence, energy is required in order to operate a first HP bleacher unit at a high-pressure and then recycle NOₓ gases to the delivery side of the NOₓ gas compressor.

Therefore, there remains a need for a process and a corresponding plant setup for minimizing or even suppressing the amount of energy required in order to operate the air compressor, in order to avoid bottle-necks in the nitric acid production throughput associated with those compressors.

### Summary

In one aspect of the disclosure, a production plant for producing nitric acid at reduced power consumption and reduced emissions is disclosed. The production plant comprises:
- an air compressor providing compressed air;
- a supply for an oxygen-rich gas, the oxygen-rich gas being in fluid communication with compressed air, the mixing of the oxygen-rich gas and of compressed air providing part of a first oxygen-containing gas;
- a mixing apparatus, for mixing the first oxygen-containing gas with an ammonia gas stream, to produce an ammonia/oxygen-containing gas mixture;
- an ammonia converter operable at a pressure P1, for oxidising ammonia in the ammonia/oxygen-containing gas mixture, to produce a NOₓ gas/steam mixture comprising water and nitric oxide;
- a means for regulating the concentration of ammonia and/or of oxygen in the ammonia converter, particularly a means for controlling the flow of the oxygen-rich gas and/or a means for controlling the flow of the ammonia gas stream, for maintaining the oxygen to ammonia molar ratio inside the ammonia converter at a ratio of at least 1.2;
- a gas cooler/condenser downstream the ammonia converter, to produce an aqueous diluted nitric acid mixture and a gaseous NOₓ stream;
- an absorption tower, downstream the gas cooler/condenser, for absorbing the NOₓ gases from the gaseous NOₓ stream in water, to produce a stream of raw nitric acid containing residual NOₓ gas and a tail gas comprising NOₓ gases, comprising an absorption tower tail gas outlet for evacuating the tail gas; and
- a supply for a second oxygen-containing gas, for supplying oxygen to a NOₓ gas containing stream between the ammonia converter and the absorption tower, such that a tail gas stream contains at least 0.5% by volume oxygen;
- a tail gas heater, positioned upstream from the gas cooler/condenser, for heating a tail gas stream with the heat from the NOₓ gas/steam mixture coming from the ammonia converter.

The production plant is characterised in that it further comprises:
- a first and/or second means for splitting a gas stream wherein:
   (i) the first means for splitting is a means for splitting a tail gas stream into a first tail gas stream and a second tail gas stream, and wherein the first tail gas stream is in fluid communication with the oxygen-rich gas and compressed air, and wherein the mixing of compressed air, the first oxygen-rich gas and the first tail gas stream provides the first oxygen-containing gas; and
   (ii) the second means for splitting is a means for splitting a tail gas stream into a third tail gas stream and a fourth tail gas stream, and wherein the third tail gas stream is in fluid communication with compressed air and with the oxygen-rich gas, and wherein the mixing of compressed air, the oxygen-rich gas and the third tail gas stream provides at least partly the second oxygen-containing gas; and
- a means for pressurising a gas, located downstream the absorption tower, or between the ammonia converter and the absorption tower, or upstream the ammonia converter in the first oxygen-containing gas or in the ammonia/oxygen-containing gas mixture, to provide the first and/or the third tail gas stream at a pressure P1.

The inventors have found that, instead of supplying primary and secondary air solely as compressed air provided by an air compressor, it is possible to recirculate the first tail gas stream and/or the third tail gas stream, provided by the first means for splitting and the second means for splitting, respectively. The oxygen-rich gas having a pressure P1 and the second oxygen-containing gas provide oxygen to the ammonia converter and to the absorption tower, respectively, such that, even at reduced amounts of compressed air provided by the air compressor, the concentration of oxygen in the ammonia converter and in the absorption tower is at least equal to that in a state-of-the-art mono pressure nitric acid plant.

Therefore, tail gas, particularly with controlled oxygen content, can be recirculated both as primary and secondary air. Consequently, less compressed air is to be supplied such that less air has to be compressed and the power demand on the air compressor is reduced. At the same time, the size of the air compressor and that of a conventional gas expander, in which the tail gas is expanded in a state-of-the-art mono pressure nitric acid plant, are reduced, such that the footprint of the plant is reduced. Furthermore, the NOₓ emissions leaving the production plant are also reduced. Consequently, the size of the treatment unit for treating those NOₓ emissions is reduced with respect to the size in the corresponding state-of-the art mono pressure nitric acid plant.

In one embodiment according to the production plant of the disclosure, the production plant further comprises a means for controlling the flow of the first and/or the third tail gas stream.

In one embodiment according to the production plant of the disclosure, the production plant further comprises one or more of:
- a heat exchanger, for exchanging heat between a tail gas stream downstream the absorption tower and the stream of heated tail gas exiting the tail gas heater, wherein:
   (i) the tail gas stream having exchanged heat with the stream of heated tail gas is supplied to the first means for splitting downstream the heat exchanger, and wherein the means for pressurising are located upstream the heat exchanger; and/or
   (ii) the tail gas at the outlet of the absorption tower is splitted into a third tail gas stream and a fourth tail gas stream;
- a De-NOₓ treatment unit; and
- a steam turbine, wherein the steam turbine can at least partly power the means for pressurising.

In one embodiment according to the production plant of the disclosure, the production plant further comprises a bleacher comprising an inlet for an oxygen-rich bleaching gas, an inlet for the stream of raw nitric acid containing residual NOₓ gas, an outlet for bleached nitric acid and an outlet for off-gases, wherein the off-gases are in fluid communication with a gas stream between the ammonia converter and the absorption tower, such that the second oxygen-containing gas comes at least partly from the off-gases.

In one embodiment according to the production plant of the disclosure, the production plant further comprises the oxygen-rich gas, the second oxygen-containing gas, the oxygen-rich bleaching gas and the oxygen-rich off-gases are provided at least partly by a high-pressure water electrolyser.

In one embodiment according to the production plant of the disclosure, the production plant further comprises a tail gas expander for expanding the second tail gas stream to atmospheric pressure, to produce an expanded tail gas, wherein the means for pressurising can be powered at least partly by the tail gas expander or by the steam turbine or by a power source.

In one aspect of the disclosure, a method for producing nitric acid at reduced power consumption and reduced emissions, in a production plant according to the production plant of the disclosure is disclosed. The method comprises the steps of:
a) compressing air in the air compressor, thereby providing compressed air;
b) supplying compressed air obtained in step a) to the mixing apparatus;
c) supplying the ammonia gas stream to the mixing apparatus, thereby producing the ammonia/oxygen-containing gas mixture;
d) oxidising ammonia in the ammonia/oxygen-containing gas mixture in the ammonia converter at a pressure P1, thereby producing the gaseous NOₓ gas/steam mixture comprising water and nitric oxide;
e) separating and condensing steam in the gas cooler/condenser, thereby generating the aqueous diluted nitric acid mixture and the gaseous NOₓ stream;
f) absorbing the gaseous NOₓ stream in the absorption tower, thereby producing the stream of raw nitric acid containing residual NOₓ gas and the tail gas comprising NOₓ gases; and
g) heating the tail gas in the tail gas heater to a temperature up to 650 °C with the gaseous NOₓ gas/steam mixture.

The method is characterised in that it further comprises the steps of:
h) pressurising a gas stream located downstream the absorption tower, or anywhere between the ammonia converter and the absorption tower, or upstream the ammonia converter in the first oxygen-containing stream or in the ammonia/oxygen-containing gas mixture, to a pressure P1 with the means for pressurising;
i) splitting a stream of tail gas downstream the absorption tower with the first means for splitting into the first tail gas stream and the second tail gas stream and/or with the second means for splitting into the third tail gas stream and the fourth tail gas stream;
j) mixing the first tail gas stream with the oxygen-rich gas and compressed air, thereby providing the first oxygen-containing gas, and/or mixing the third tail gas stream with the oxygen-rich gas and compressed air, thereby providing at least partly the second oxygen-containing gas;
k) adjusting the flow of the oxygen-rich gas being mixed in step j) or the flow of the ammonia gas stream, such as to maintain the oxygen to ammonia molar ratio inside the ammonia converter at a ratio of at least 1.2;
I) supplying the first oxygen-containing gas to the mixing unit;
m) adjusting the flow of the second oxygen-containing gas, such that a tail gas stream contains at least 0.5% by volume oxygen; and
n) supplying the second oxygen-containing gas.

In one embodiment according to the method of the disclosure, the method further comprises the step of:
o) adjusting the flow of the first and/or the third tail gas stream.

In one embodiment according to the method of the disclosure, in step h), the tail gas obtained from step f) is pressurised in the means for pressurising, and in step i), the tail gas stream is splitted into a first tail gas stream and a second tail gas stream, and the method further comprises the steps of:
p) after step f) and before step g), heating the tail gas with the tail gas to be splitted in step i), in the heat exchanger, thereby bringing the tail gas to be mixed in step j) to a temperature below 300 °C;
q) treating the tail gas in the De-NOₓ treatment unit before step g) and after step p); and
r) recovering at least part of the heat energy generated in the ammonia converter in a steam turbine.

In one embodiment according to the method of the disclosure, in step h), the tail gas obtained from step f) is pressurised in the means for pressurising, and in step i), the pressurised tail gas obtained from step h) is splitted into a third tail gas stream and a fourth tail gas stream.

In one embodiment according to the method of the disclosure, the method further comprises the step of:
s) bleaching the stream of raw nitric acid containing residual NOₓ gas obtained in step f) in the bleacher, thereby producing the bleached nitric acid.

In one embodiment according to the method of the disclosure, the method further comprises the steps of:
t) operating the high-pressure water electrolyser, thereby producing pressurized oxygen; and
u) providing, from the oxygen produced by the water electrolyser in step t), at least part of the oxygen-rich gas, the second oxygen-containing gas, the oxygen-rich bleaching gas and the oxygen-rich off-gases.

In one embodiment according to the method of the disclosure, the method further comprises the step of:
v) expanding the second tail gas stream in the tail gas expander to atmospheric pressure, thereby producing the expanded tail gas.

In one aspect of the disclosure, the use of the production plant of the disclosure for performing the method of the disclosure, is disclosed.

In one aspect of the disclosure, a method for revamping a production plant for producing nitric acid, comprising:
- an air compressor for providing compressed air;
- a mixing apparatus for mixing compressed air with an ammonia gas stream, to produce an ammonia/oxygen-containing gas mixture;
- an ammonia converter, for oxidising ammonia in the ammonia/oxygen-containing gas mixture, to produce a NOₓ gas/steam mixture comprising water and nitric oxide;
- a gas cooler/condenser downstream the ammonia converter, to produce an aqueous diluted nitric acid mixture and a gaseous NOₓ stream;
- an absorption tower, downstream the gas cooler/condenser, for absorbing the NOₓ gases from the gaseous NOₓ stream in water, to produce a stream of raw nitric acid containing residual NOₓ gas and a tail gas comprising NOₓ gases, comprising an absorption tower tail gas outlet for evacuating the tail gas; and
- a tail gas heater, positioned upstream from the gas cooler/condenser, for heating a tail gas stream with the heat from the NOₓ gas/steam mixture coming from the ammonia converter;
into a production plant according to any one of claims 1 to 7, comprising the steps of:
- introducing a supply for an oxygen-rich gas, the oxygen-rich gas being in fluid communication with compressed air, the mixing of the oxygen-rich gas and of compressed air providing part of a first oxygen-containing gas;
- introducing a supply for second oxygen-containing gas, for supplying oxygen between the ammonia converter and the absorption tower, such that a tail gas stream contains at least 0.5% by volume oxygen;
- introducing a means for regulating the concentration of oxygen in the ammonia converter and/or of the ammonia gas stream, particularly a means for controlling the flow of the oxygen-rich gas and/or a means for controlling the flow of the ammonia gas stream, for maintaining the oxygen to ammonia molar ratio inside the ammonia converter at a ratio of at least 1.2;
- introducing a first means for splitting and/or a second means for splitting a tail gas stream, wherein:
   (i) the first means of splitting is configured to split a tail gas stream into a first tail gas stream and a second tail gas stream, and wherein the first tail gas stream is in fluid communication with the oxygen-rich gas and compressed air, thereby providing the first oxygen-containing gas; and
   (ii) the second means of splitting is configured to split a tail gas stream into a third tail gas stream and a fourth tail gas stream, and wherein the third tail gas stream is in fluid communication with the oxygen-rich gas and compressed air, thereby providing at least partly the second oxygen-containing gas; and
- introducing a means for pressurising a gas to a pressure P1 downstream the absorption tower, or between the ammonia converter and the absorption tower, or in the first oxygen-containing stream or in the ammonia/oxygen-containing gas mixture, such as to provide the first and/or the third tail gas stream at a pressure P1.

### List of Figures

**Figure 1****:** Nitric acid plant according to the prior art
**Figure 2****:** Nitric acid plant according to an embodiment of the present application
**Figure 3****:** Nitric acid plant according to an embodiment of the present application comprising a bleacher **(57)**

### Table of numerals

| | |
|---|---|
| **4** | air |
| **5** | tail gas |
| **6** | outlet of nitric acid absorption tower |
| **7** | tail gas expander |
| **14** | ammonia/oxygen-enriched air mixture |
| **15** | NOₓ gas/steam mixture |
| **17** | aqueous diluted nitric acid mixture |
| **22** | gaseous NOₓ stream |
| **27** | stream of raw nitric acid containing residual NOₓ gas |
| **32** | ammonia |
| **34** | compressed air |
| **35** | mixing apparatus |
| **36** | air compressor |
| **37** | ammonia converter operable at a pressure P1 |
| **38** | gas cooler/condenser |
| **39** | cooler/separator |
| **41** | absorption tower |
| **43** | tail gas heater |
| **50** | oxygen-rich gas |
| **51** | steam turbine |
| **52** | first tail gas stream |
| **53** | means for pressurising a tail gas stream |
| **55** | first means for splitting a stream of tail gas |
| **56** | first oxygen-containing gas |
| **57** | bleacher |
| **58** | bleacher inlet for bleaching gas **60** |
| **59** | bleacher outlet for bleached nitric acid **63** |
| **60** | oxygen-rich gas bleaching gas |
| **61** | off-gases out of the bleacher **57** |
| **63** | bleached nitric acid |
| **64** | bleacher inlet for raw nitric acid containing residual NOₓ gas **27** |
| **65** | bleacher outlet for off-gases **61** |
| **66** | pressurised water electrolyser |
| **67** | second oxygen-containing gas |
| **70** | expanded tail gas |
| **71** | De-NOₓ treatment unit |
| **73** | heat exchanger |
| **74** | second tail gas stream |
| **75** | second means for splitting |
| **76** | third tail gas stream |
| **77** | fourth tail gas stream |

### Detailed description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed.

Where the term "about" when applied to a particular value or to a range, the value or range is interpreted as being as accurate as the method used to measure it.

### Mono pressure production plant for producing nitric acid

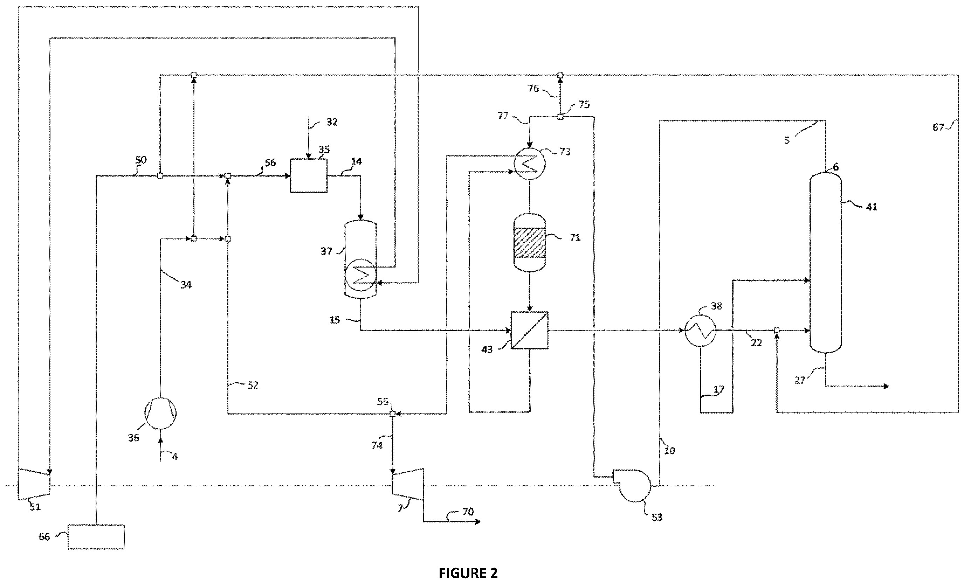

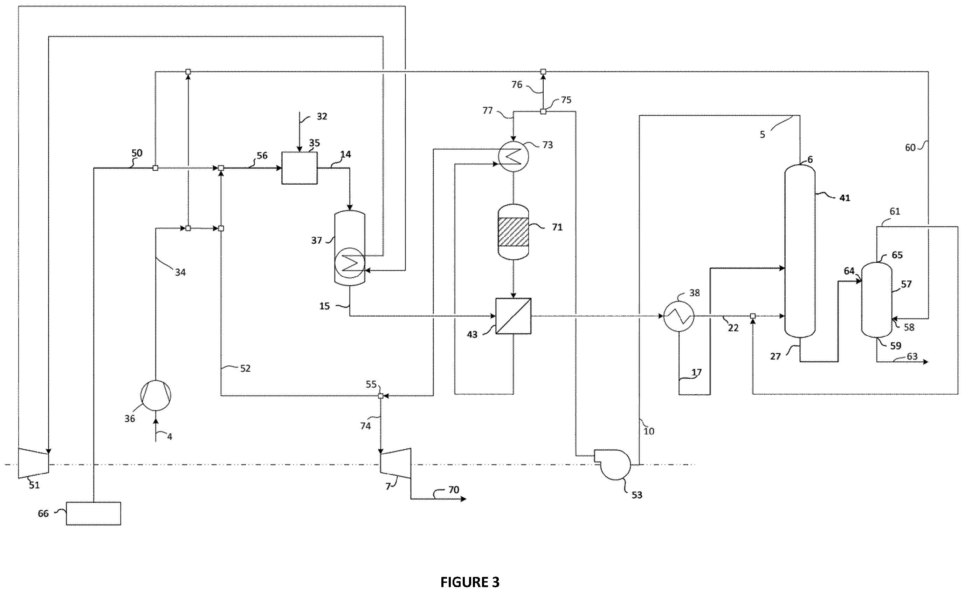

Reference is made to Figures 2 and 3. In one aspect of the disclosure, a production plant for producing nitric acid at reduced power consumption and reduced emissions is disclosed. The production plant comprises an air compressor **36** providing compressed air **34**; a supply for an oxygen-rich gas **50**, the oxygen-rich gas **50** being in fluid communication with compressed air **34**, the mixing of the oxygen-rich gas **50** and of compressed air **34** providing part of a first oxygen-containing gas **56**; a mixing apparatus **35**, for mixing the first oxygen-containing gas **56** with an ammonia gas stream **32**, to produce an ammonia/oxygen-containing gas mixture **14**; an ammonia converter **37** operable at a pressure P1, for oxidising ammonia in the ammonia/oxygen-containing gas mixture **14**, to produce a NOₓ gas/steam mixture **15** comprising water and nitric oxide; a means for regulating the concentration of ammonia and/or of oxygen in the ammonia converter **37**, particularly a means for controlling the flow of the oxygen-rich gas **50** and/or a means for controlling the flow of the ammonia gas stream **32**, for maintaining the oxygen to ammonia molar ratio inside the ammonia converter **37** at a ratio of at least 1.2; a gas cooler/condenser **38** downstream the ammonia converter **37**, to produce an aqueous diluted nitric acid mixture **17** and a gaseous NOₓ stream **22**; an absorption tower **41**, downstream the gas cooler/condenser **38**, for absorbing the NOₓ gases from the gaseous NOₓ stream **22** in water, to produce a stream of raw nitric acid containing residual NOₓ gas **27** and a tail gas **5** comprising NOₓ gases, comprising an absorption tower tail gas outlet **6** for evacuating the tail gas **5**; and a supply for a second oxygen-containing gas **60**, **61**, **67**, for supplying oxygen to a NOₓ gas containing stream between the ammonia converter **37** and the absorption tower **41**, such that a tail gas stream **5, 52, 74, 76, 77** contains at least 0.5% by volume oxygen; a tail gas heater **43**, positioned upstream from the gas cooler/condenser **38**, for heating a tail gas stream with the heat from the NOₓ gas/steam mixture **15** coming from the ammonia converter **37**.

The production plant is characterised in that it further comprises a first and/or second means for splitting a gas stream wherein (i) the first means for splitting **55** is a means for splitting a tail gas stream into a first tail gas stream 52 and a second tail gas stream 74, wherein the first tail gas stream 52 is in fluid communication with the oxygen-rich gas 50 and compressed air 34, and wherein the mixing of compressed air 34, the first oxygen-rich gas 50 and the first tail gas stream 52 provides the first oxygen-containing gas 56; and (ii) the second means for splitting 75 is a means for splitting a tail gas stream 5 into a third tail gas stream 76 and a fourth tail gas stream 77, and wherein the third tail gas stream 76 is in fluid communication with compressed air 34 and with the oxygen-rich gas 50, and the mixing of compressed air **34,** the oxygen-rich gas **50** and wherein the third tail gas stream **76** provides at least partly the second oxygen-containing gas **60, 61, 67;** and a means for pressurising **53** a gas, located downstream the absorption tower **41,** or between the ammonia converter **37** and the absorption tower **41,** or upstream the ammonia converter **37** in the first oxygen-containing gas **56** or in the ammonia/oxygen-containing gas mixture **14,** to provide the first and/or the third tail gas stream **52, 76** at a pressure P1.

As defined herein, an oxygen-rich gas is a gas comprising more than 21 vol% of oxygen, more in particular more than 30 vol%, more than 35 vol%, more than 40 vol%, more than 50 vol%, more than 60 vol%, more than 70 vol%, more than 80 vol%, more than 90 vol%, more than 95 vol%, more than 98 vol% and more than 99 vol%, more in particular 100 vol% of oxygen. An oxygen-rich gas can, for example, be provided by an air separation unit or by a water electrolyser.

As defined herein, steam is water vapours. As defined herein, the term flow refers to either a volumetric flow or a mass flow.

As defined herein a tail gas heater is a heat exchange system comprising one or more heat exchanger units. In the case the heat exchanger is made of multiple heat exchanger units, the person skilled in the art will realise that it is possible to split the stream of tail gas downstream the absorption tower **41** inside the tail gas heater **43.**

As defined herein, a tail gas stream is any gas stream provided downstream the absorption tower, between the absorption tower **41** and the communication between the first tail gas stream **52** and the oxygen-rich gas **50.**

As defined herein, a means for splitting is any means suitable for splitting a tail gas stream such as to generate e.g. a first tail gas stream **52** and a second tail gas stream **74,** or a third tail gas stream **76** and a fourth tail gas stream **77.** In particular, the means for splitting is a T-connection having one inlet and two outlets, such that a gas flowing through the inlet of the T-connection is splitted into two gas streams of identical chemical composition.

As defined herein, a means for pressurising is any suitable means for increasing the pressure of a gas stream. In particular, the means for pressurising is a gas compressor or a gas ejector. The person skilled in the art will realise that the means for splitting can be incorporated inside the means for pressurising, provided that the means for pressurising includes at least two outlets for the gas stream being pressurised.

As defined herein, a means for regulating the concentration of ammonia and/or of oxygen is any means for suitable for achieving a target concentration of ammonia and/or of oxygen. In particular, such means are gas flow control means, in particular a flow control valve or an orifice or a guide vane, for controlling the flow of the oxygen-rich gas **50** and/or of the ammonia gas stream **32.** In particular, the means is an integrated process control system, in which the concentration of oxygen is measured and the target flow of oxygen is thereby determined and achieved from controlling the flow of the oxygen-rich gas **50.** The oxygen concentration can also be determined from computing, by using the oxygen concentration of the oxygen-rich gas **50,** the flow at which the oxygen-rich gas **50** and of the ammonia gas stream **32** are introduced in the system, and the relative flow values at which the oxygen-rich gas **50** and the ammonia gas stream **32** are mixed.

Typically, P1 ranges from 2 to 16 bara. The person skilled in the art will determine the optimal concentrations of oxygen in the gases entering the ammonia converter **37** and the absorption tower **41,** in order for the catalytic conversion of ammonia to nitric oxide to proceed optimally in the ammonia converter **37** and for the absorption of NOₓ gases in the absorption tower **41** to proceed optimally. The person skilled in the art will also weigh out the benefits of increasing the oxygen content in the absorption tower **41,** namely a reduced tower size due to improved absorption, against the drawback of a higher gas volume downstream the absorption tower **41,** which implies equipment, such as heat exchangers, of a larger size, for heating tail gas.

The inventors have found that, instead of supplying primary and secondary air solely as compressed air **34** provided by an air compressor **36**, it is possible to recirculate the first tail gas stream **52** and/or the third tail gas stream **76**, provided by the first means for splitting **55** and the second means for splitting **75,** respectively. The oxygen-rich gas **50** having a pressure P1 and the second oxygen-containing gas **67** provide oxygen to the ammonia converter **37** and to the absorption tower **41**, respectively, such that, even at reduced amounts of compressed air **34** air provided by the air compressor **36**, the concentration of oxygen in the ammonia converter **37** and in the absorption tower **41** is at least equal to that in a state-of-the-art mono pressure nitric acid plant. The person skilled in the art will realise that, if the pressure of the oxygen-rich gas **50** is lower than P1, or at a pressure such that the pressure of the first oxygen-containing gas **56** is, the relevant pressure drop being accounted for, lower than the operating pressure of the ammonia converter **37**, the oxygen-rich gas **50** can be compressed through the air compressor **36**. The fluid communication between compressed air and the oxygen-rich gas **50** is then introduced inside the air compressor **36**.

Therefore, tail gas can be recirculated both as primary and secondary air. Consequently, less compressed air **34** is to be supplied such that less air has to be compressed and the power demand on the air compressor **34** is reduced. At the same time, the size of the air compressor **36** and that of a conventional gas expander **7**, in which the tail gas **5** is expanded in a state-of-the-art mono pressure nitric acid plant, are reduced, such that the footprint of the plant is reduced. Furthermore, the NOₓ emissions leaving the production plant are also reduced. Consequently, the size of the treatment unit for treating those NOₓ emissions is reduced with respect to the size in the corresponding state-of-the art mono pressure nitric acid plant.

In one embodiment according to the production plant of the disclosure, the production plant further comprises a means for controlling the flow of the first and/or the third tail gas stream **52**, **76**.

As defined herein, means for controlling the flow of the first and/or the third tail gas stream **52**, **76** is any means for respectively controlling the splitting in the first means for splitting **55** and/or the second means for splitting **75**. In particular, the first means for splitting **55** and/or the second means for splitting **76** is a T-connection as described above and the means for controlling is an orifice or a guide vane or a flow control valve at one or both of the outlets of the T-connection.

The control of the flow of the first tail gas **52** enables to retain further control on the pressure and temperature inside the ammonia converter **37**. Similarly, control of the flow of the third tail gas **76** enables to retain further control on the pressure and temperature inside the absorption tower **41**.

In one embodiment according to the production plant of the disclosure, the production plant further comprises one or more of a heat exchanger **73**, for exchanging heat between a tail gas stream **77** downstream the absorption tower **41** and the stream of heated tail gas exiting the tail gas heater **43**, wherein (i) the tail gas stream having exchanged heat with the stream of heated tail gas is supplied to the first means for splitting **55** downstream the heat exchanger **73**, and wherein the means for pressurising **53** are located upstream the heat exchanger **73**; and/or (ii) the tail gas **5** at the outlet **6** of the absorption tower **41** is splitted into a third tail gas stream **76** and a fourth tail gas stream **77**; a De-NOₓ treatment unit **71**; and a steam turbine **51**, wherein the steam turbine can at least partly power the means for pressurising **53**.

As defined herein, means for converting steam into power are any mean for achieving power from steam. In particular, those means are a steam turbine connected to an electric generator.

Advantageously, the first means for splitting **55** and/or the second means for splitting **75** is located downstream the tail gas heater **43**. Indeed, both the first tail gas stream **52** and the second tail gas stream **74** are then at an optimal temperature. This means that the first tail gas stream **52** is at a temperature below 300 °C, such that the first tail gas stream **52** can be fed to the ammonia converter **37** without the amount of ammonia fed through the stream **32** having to be adjusted, in order to maintain the temperature at which the ammonia converter **37** is operable. Typically, the ammonia converter is operated at a temperature ranging from 800 to 950 °C. In addition, the location of the first means for splitting **55** downstream the tail gas heater **43** to the second tail gas stream **74** an optimal temperature for being expanded such as to provide an optimum of energy which can be used to power, at least partly, the air compressor **36** or the means for pressurising **53**.

Further, the presence of a steam turbine **51** allows for the recovery of the heat of the steam produced in the ammonia converter **37** and this recovered heat can be used, at least partly, for powering the air compressor **36** or the means for pressurising **53**.

In addition, the location of the means for pressurising **53** upstream the heat exchanger **73** contribute to operating the production plant in an energy-efficient manner. Indeed, less power is required for the means for pressurising **53** to pressurise a tail gas stream before it is heated by the heat exchanger **73**.

In particular, the tail gas **5** exiting the outlet **6** of the absorption tower **41** is heated in the heat exchanger **73** from a temperature ranging from 20 to 250 °C, to a temperature ranging from 100 to 450 °C. Subsequently, the tail gas exiting the heat exchanger **73** is heated in the tail gas heater **43** to a temperature ranging from 200 to 550 °C. The tail gas exiting the heat exchanger **73** then is at an optimal temperature for being treated in the De-NOₓ treatment unit **71** and, therefore, the De-NOₓ treatment unit **71** is located between the heat exchanger **73** and the tail gas heater **43**. The person skilled in the art will, without any difficulty, select the proper location for the De-NOₓ treatment unit **71** such that the operating temperature of the De-NOₓ treatment unit **71** is in agreement with the temperature of the corresponding tail gas stream. In the presence of a De-NOₓ treatment unit **71**, the NOₓ emissions leaving the production plant through the second tail gas stream **74** are reduced.

In particular, part of the tail gas **5**, that is the second tail gas stream **76** provided by the second means for splitting **75**, can be recirculated to a point between the ammonia converter **37** and the absorption tower **41**, which reduces the duty on secondary air to be provided by the air compressor **36**.

In one embodiment according to the production plant of the disclosure, the production plant further comprises a bleacher **57** comprising an inlet **58** for an oxygen-rich bleaching gas **60**, an inlet **64** for the stream of raw nitric acid containing residual NOₓ gas **27**, an outlet **59** for bleached nitric acid **63** and an outlet **65** for off-gases **61**, wherein the off-gases **61** are in fluid communication with a gas stream between the ammonia converter **37** and the absorption tower **41**, such that the second oxygen-containing gas **67** comes at least partly from the off-gases **60**, **61**.

The person skilled in the art will understand that the pressure of the bleaching gases **61** is to be adjusted to about P1 before they are mixed with the gaseous NOₓ stream **22**. When the stream of raw nitric acid containing residual NOₓ gas **27** is bleached, the amounts of NOₓ gases and nitrous acid HNO₂ in the nitric acid solution are reduced. This in turn results in less brown fumes coming out of the nitric acid solution. In addition, the nitric acid solution provided by the bleacher is of a higher quality, that is purer.

Conveniently, when the stream of raw nitric acid containing residual NOₓ gas **27** is bleached, the supply of the second oxygen-containing gas **67** is achieved through the oxygen-rich bleaching gas **60** and, in turn, through the bleacher **57** and the off-gases **61**.

In one embodiment according to the production plant of the disclosure, the production plant further comprises the oxygen-rich gas **50**, the second oxygen-containing gas **67**, the oxygen-rich bleaching gas **60** and the oxygen-rich off-gases **61** are provided at least partly by a high-pressure water electrolyser **66**.

A water electrolyser is a device for the electrolysis of water, being the decomposition of water into oxygen and hydrogen gas, due to the passage of an electric current therethrough. This technique can be used to make hydrogen gas, a main component of hydrogen fuel, and oxygen gas. A suitable high-pressure water electrolyser may comprise an anode producing oxygen gas according to the reaction

2 OH- = H₂O + % O₂ + 2 e-;

a cathode, producing hydrogen gas according to the reaction

2 H₂O + 2 e- = H₂ + 2 OH- ;

an electrolyte consisting of an alkaline solution such as potassium hydroxide; and a porous diaphragm separating the anode and the cathode, in order to avoid the mixing of hydrogen gas and oxygen gas that together form an explosive mixture. Alternatively, the anode and the cathode may be separated by a solid polymer electrolyte such as the fluoropolymer Nafion, where the electrolyte provides the selective transport of protons from the anode to the cathode, as well as the electrical insulation between the anode and the cathode, and avoids the mixing of hydrogen gas and oxygen gas that together form an explosive mixture.

The anode and cathode can be made of nickel or steel, or mixtures thereof. Alternatively, for the purpose of enhancing the electrode reactions, the anode and cathode may contain catalysts that can be made of Iridium and Platinum, respectively. The diaphragm of an electrically insulating material is based on, for example, zirconia. The diaphragm has a porosity such that it forms a barrier against transport of hydrogen and oxygen gas bubbles, while containing a continuum of penetrated liquid electrolyte. An anode-diaphragm-cathode assembly constitutes an electrolysis cell. Electrolysis cells are piled in series in stacks that compose the core of an electrolyser. The hydrogen and oxygen production for a given stack volume is proportional to the current density and inversely proportional to the stacking distance. Regardless of stack volume, the hydrogen and oxygen production is proportional to the total current. In addition to the stack, the electrolyser comprises auxiliaries such as a current rectifier, a water demineralization unit, a water pump and a cooling system, a hydrogen purification unit, and instrumentation.

The electrolyser is operated by applying a voltage corresponding to the state-of-the-art potential plus the overpotential over each cell. The total voltage depends on the total number of cells of which the electrolyser is comprised. OH- ions generated at the cathode migrate through the electrolyte in the diaphragm to the anode, where they are consumed by the anode reaction. Electrons travel the opposite direction in an external circuit. A high-pressure water electrolyser is operated at a pressure higher than P1, in particular higher than 2 bara, in particular 9 to 30 bara, more in particular 15 to 30 bara and may be operated at a temperature of 50 to 80 °C, or 60 to 80 °C.

A high-pressure water electrolyser hence results in the production of pressurised hydrogen at the cathode and pressurised oxygen at the anode, the produced oxygen and hydrogen gases having a higher pressure than atmospheric pressure. What is required to perform high-pressure electrolysis is to pressurize the water used in the electrolysis process. As pressurising water requires less power than pressuring a gas, the use of a high-pressure water electrolyser results in the production of pressurised oxygen-rich gas at minimized power consumption.

Conveniently, the high-pressure water electrolyser **66** provides oxygen to all the various points in the production plant where oxygen needs to be fed. In particular, the supply of oxygen from the electrolyser **66** is sufficient to provide all of the oxygen of the oxygen-rich gas **50**, the second oxygen-containing gas **67**, the oxygen-rich bleaching gas **60** and the oxygen-rich off-gases **61**. In this manner, the system is simplified and can comprise a single source of oxygen from which oxygen-containing gas streams at the desired pressure, following standard pressure adjustment, can be produced.

Another advantage of the presence of a high-pressure water electrolyser lies in the potential to, in parallel to producing oxygen gas that can be used in nitric acid production, also produce hydrogen gas. Such hydrogen gas is produced in a green manner, that is without the conventional use of natural gas which results in the production of the greenhouse gas carbon dioxide, CO₂. The hydrogen gas can then be used in the production of ammonia in an Haber-Bosch or also conventionally named synthesis gas unit. The high-pressure water electrolyser then enables the integration of the ammonia and nitric acid production processes.

In one embodiment according to the production plant of the disclosure, the production plant further comprises a tail gas expander **7** for expanding the second tail gas stream **74** to atmospheric pressure, to produce an expanded tail gas **70**, wherein the means for pressurising **53** can be powered at least partly by the tail gas expander **7** or by the steam turbine **51** or by a power source.

In the presence of such tail gas expander **7**, the second tail gas stream **74** can be expanded, thereby providing power that can be used, at least partly, for operating the means for pressurising **53**, and for operating the air compressor **36**.

### Method for producing nitric acid

In one aspect of the disclosure, a method for producing nitric acid at reduced power consumption and reduced emissions, in a production plant according to the production plant of the disclosure is disclosed. The method comprises the steps of a) compressing air in the air compressor **36**, thereby providing compressed air **34**; b) supplying compressed air **34** obtained in step a) to the mixing apparatus **35**; c) supplying the ammonia gas stream **32** to the mixing apparatus **35**, thereby producing the ammonia/oxygen-containing gas mixture **14**; d) oxidising ammonia in the ammonia/oxygen-containing gas mixture **14** in the ammonia converter **37** at a pressure P1, thereby producing the gaseous NOₓ gas/steam mixture **15** comprising water and nitric oxide; e) separating and condensing steam in the gas cooler/condenser **38**, thereby generating the aqueous diluted nitric acid mixture **17** and the gaseous NOₓ stream **22**; f) absorbing the gaseous NOₓ stream **22** in the absorption tower **41**, thereby producing the stream of raw nitric acid containing residual NOₓ gas **27** and the tail gas **5** comprising NOₓ gases; and g) heating the tail gas **5** in the tail gas heater **43** to a temperature up to 650 °C with the gaseous NOₓ gas/steam mixture **15**.

The method is characterised in that it further comprises the steps of h) pressurising a gas stream located downstream the absorption tower **41**, or anywhere between the ammonia converter **37** and the absorption tower **41**, or upstream the ammonia converter **37** in the first oxygen-containing stream **56** or in the ammonia/oxygen-containing gas mixture **14**, to a pressure P1 with the means for pressurising **53**; i) splitting a stream of tail gas downstream the absorption tower **41** with the first means for splitting into the first tail gas stream **52** and the second tail gas stream **74** and/or with the second means for splitting into the third tail gas stream **76** and the fourth tail gas stream **77**; j) mixing the first tail gas stream **52** with the oxygen-rich gas **50** and compressed air **34**, thereby providing the first oxygen-containing gas **56**, and/or mixing the third tail gas stream **76** with the oxygen-rich gas **50** and compressed air **34**, thereby providing at least partly the second oxygen-containing gas **60**, **61**, **67**; k) adjusting the flow of the oxygen-rich gas **50** being mixed in step j) or the flow of the ammonia gas stream **32**, such as to maintain the oxygen to ammonia molar ratio inside the ammonia converter **37** at a ratio of at least 1.2; I) supplying the first oxygen-containing gas **56** to the mixing unit **35**; m) adjusting the flow of the second oxygen-containing gas **60**, **67**, such that a tail gas stream **5**, **52**, **74**, **76**, **77** contains at least 0.5% by volume oxygen; and n) supplying the second oxygen-containing gas **60**, **61**, **67**.

Typically, P1 ranges from 2 to 16 bara. The person skilled in the art will determine the optimal concentrations of oxygen in the gases entering the ammonia converter **37** and the absorption tower **41**, in order for the catalytic conversion of ammonia to nitric oxide to proceed optimally in the ammonia converter **37** and for the absorption of NOₓ gases in the absorption tower **41** to proceed optimally. The person skilled in the art will also weigh out the benefits of increasing the oxygen content in the absorption tower **41**, namely a reduced tower size due to improved absorption, against the drawback of a higher gas volume downstream the absorption tower **41**, which implies equipment, such as heat exchangers, of a larger size, for heating tail gas.

The inventors have found that, instead of supplying primary and secondary air solely as compressed air **34** provided by an air compressor **36**, it is possible to recirculate the first tail gas stream **52** and/or the third tail gas stream **76**, provided by the first means for splitting **55** and the second means for splitting **75**, respectively. The oxygen-rich gas **50** having a pressure P1 and the second oxygen-containing gas **67** provide oxygen to the ammonia converter **37** and to the absorption tower **41**, respectively, such that, even at reduced amounts of compressed air **34** air provided by the air compressor **36**, the concentration of oxygen in the ammonia converter **37** and in the absorption tower **41** is at least equal to that in a state-of-the-art mono pressure nitric acid plant. The person skilled in the art will realise that if the pressure of the oxygen-rich gas **50** is lower than P1, or at a pressure such that the pressure of the first oxygen-containing gas **56** is, the relevant pressure drop being accounted for, lower than the operating pressure of the ammonia converter **37**, the oxygen-rich gas **50** can be compressed through the air compressor **36**. The fluid communication between compressed air and the oxygen-rich gas **50** is then introduced inside the air compressor **36**.

Therefore, tail gas can be recirculated both as primary and secondary air. Consequently, less compressed air **34** is to be supplied such that less air has to be compressed and the power demand on the air compressor **34** is reduced. At the same time, the size of the air compressor **36** and that of a conventional gas expander **7**, in which the tail gas **5** is expanded in a state-of-the-art mono pressure nitric acid plant, are reduced, such that the footprint of the plant is reduced. Furthermore, the NOₓ emissions leaving the production plant are also reduced. Consequently, the size of the treatment unit for treating those NOₓ emissions is reduced with respect to the size in the corresponding state-of-the art mono pressure nitric acid plant.

In one embodiment according to the method of the disclosure, the method further comprises the step of o) adjusting the flow of the first and/or the third tail gas stream **52**, **76**.

The control of the flow of the first tail gas **52** enables to retain further control on the pressure and temperature inside the ammonia converter **37**. Similarly, control of the flow of the third tail gas **76** enables to retain further control on the pressure and temperature inside the absorption tower **41**.

In one embodiment according to the method of the disclosure, in step h), the tail gas **5** obtained from step f) is pressurised in the means for pressurising **53**, and in step i), the tail gas stream is splitted into a first tail gas stream **52** and a second tail gas stream **74**, and the method further comprises the steps of p) after step f) and before step g), heating the tail gas **5** with the tail gas to be splitted in step i), in the heat exchanger **73**, thereby bringing the tail gas to be mixed in step j) to a temperature below 300 °C; q) treating the tail gas in the De-NOₓ treatment unit **71** before step g) and after step p); and r) recovering at least part of the heat energy generated in the ammonia converter **37** in a steam turbine **51**.

Advantageously, the first means for splitting **55** is located downstream the tail gas heater **43**. Indeed, the first tail gas stream **52** and the second tail gas stream **74** are then at an optimal temperature. This means that the first tail gas stream **52** is at a temperature below 300 °C, such that the first tail gas stream **52** can be fed to the ammonia converter **37** without the amount of ammonia fed through the stream **32** having to be adjusted, in order to maintain the temperature at which the ammonia converter **37** is operable. Typically, the ammonia converter is operated at a temperature ranging from 800 to 950 °C. In addition, the location of the first means for splitting **55** downstream the tail gas heater **43** to the second tail gas stream **74** an optimal temperature for being expanded such as to provide an optimum of energy which can be used to power, at least partly, the air compressor **36** or the means for pressurising **53**.

Further, the presence of a steam turbine **51** allows for the recovery of the heat of the steam produced in the ammonia converter **37** and this recovered heat can be used, at least partly, for powering the air compressor **36** or the means for pressurising **53**.

In addition, the location of the means for pressurising **53** upstream the heat exchanger **73** contribute to operating the production plant in an energy-efficient manner. Indeed, less power is required for the means for pressurising **53** to pressurise a tail gas stream before it is heated by the heat exchanger **73**.

In particular, the tail gas **5** exiting the outlet **6** of the absorption tower **41** is heated in the heat exchanger **73** from a temperature ranging from 20 to 250 °C, to a temperature ranging from 100 to 450 °C. Subsequently, the tail gas exiting the heat exchanger **73** is heated in the tail gas heater **43** to a temperature ranging from 200 to 550 °C. The tail gas exiting the heat exchanger **73** then is at an optimal temperature for being treated in the De-NOₓ treatment unit **71** and, therefore, the De-NOₓ treatment unit **71** is located between the heat exchanger **73** and the tail gas heater **43**. The person skilled in the art will, without any difficulty, select the proper location for the De-NOₓ treatment unit **71** such that the operating temperature of the De-NOₓ treatment unit **71** is in agreement with the temperature of the corresponding tail gas stream. In the presence of a De-NOₓ treatment unit **71**, the NOₓ emissions leaving the production plant through the second tail gas stream **74** are reduced.

In one embodiment according to the method of the disclosure, in step h), the tail gas **5** obtained from step f) is pressurised in the means for pressurising **53**, and in step i), the pressurised tail gas obtained from step h) is splitted into a third tail gas stream **76** and a fourth tail gas stream **77**.

In particular, part of the tail gas **5**, that is the second tail gas stream **76** provided by the second means for splitting **75**, can be recirculated to a point between the ammonia converter **37** and the absorption tower **41**, which reduces the duty on secondary air to be provided by the air compressor **36**.

In one embodiment according to the method of the disclosure, the method further comprises the step of s) bleaching the stream of raw nitric acid containing residual NOₓ gas **27** obtained in step f) in the bleacher **57**, thereby producing the bleached nitric acid **63**.

The person skilled in the art will understand that the pressure of the bleaching gases **61** is to be adjusted to about P1 before they are mixed with the gaseous NOₓ stream **22**. When the stream of raw nitric acid containing residual NOₓ gas **27** is bleached, the amounts of NOₓ gases and nitrous acid HNO₂ in the nitric acid solution are reduced. This in turn results in less brown fumes coming out of the nitric acid solution. In addition, the nitric acid solution provided by the bleacher is of a higher quality, that is purer.

Conveniently, when the stream of raw nitric acid containing residual NOₓ gas **27** is bleached, the supply of the second oxygen-containing gas **67** is achieved through the oxygen-rich bleaching gas **60** and, in turn, through the bleacher **57** and the off-gases **61**.

In one embodiment according to the method of the disclosure, the method further comprises the steps of t) operating the high-pressure water electrolyser **66**, thereby producing pressurized oxygen; and u) providing, from the oxygen produced by the water electrolyser **66** in step t), at least part of the oxygen-rich gas **50**, the second oxygen-containing gas **67**, the oxygen-rich bleaching gas **60** and the oxygen-rich off-gases **61**.

Conveniently, the high-pressure water electrolyser **66** provides oxygen to all the various points in the production plant where oxygen needs to be fed. In particular, the supply of oxygen from the electrolyser **66** is sufficient to provide all of the oxygen the oxygen-rich gas **50**, the second oxygen-containing gas **67**, the oxygen-rich bleaching gas **60** and the oxygen-rich off-gases **61**. In this manner, the system is simplified and can comprise a single source of oxygen from which oxygen-containing gas streams at the desired pressure, following standard pressure adjustment, can be produced.

Another advantage of the presence of a high-pressure water electrolyser lies in the potential to, in parallel to producing oxygen gas that can be used in nitric acid production, also produce hydrogen gas. Such hydrogen gas is produced in a green manner, that is without the conventional use of natural gas which results in the production of the greenhouse gas carbon dioxide, CO₂. The hydrogen gas can then be used in the production of ammonia in an Haber-Bosch or also conventionally named synthesis gas unit. The high-pressure water electrolyser then enables the integration of the ammonia and nitric acid production processes.

In one embodiment according to the method of the disclosure, the method further comprises the step of v) expanding the second tail gas stream **74** in the tail gas expander **7** to atmospheric pressure, thereby producing the expanded tail gas **70**.

In the presence of such tail gas expander **7**, the second tail gas stream **74** can be expanded, thereby providing power that can be used, at least partly, for operating the means for pressurising **53**, and for operating the air compressor **36**.

### Use of the production plant of the disclosure

In one aspect of the disclosure, the use of the production plant of the disclosure for performing the method of the disclosure, is disclosed.

### Method for revamping a state-of-the art mono pressure nitric acid production plant

In one aspect of the disclosure, a method for revamping a production plant for producing nitric acid, comprising an air compressor **36** for providing compressed air **34**; a mixing apparatus **35** for mixing compressed air **34** with an ammonia gas stream **32**, to produce an ammonia/oxygen-containing gas mixture **14**; an ammonia converter **37**, for oxidising ammonia in the ammonia/oxygen-containing gas mixture **14**, to produce a NOₓ gas/steam mixture **15** comprising water and nitric oxide; a gas cooler/condenser 38 downstream the ammonia converter **37**, to produce an aqueous diluted nitric acid mixture **17** and a gaseous NOₓ stream **22**; an absorption tower **41**, downstream the gas cooler/condenser **38**, for absorbing the NOₓ gases from the gaseous NOₓ stream **22** in water, to produce a stream of raw nitric acid containing residual NOₓ gas **27** and a tail gas **5** comprising NOₓ gases, comprising an absorption tower tail gas outlet **6** for evacuating the tail gas **5**; and a tail gas heater **43**, positioned upstream from the gas cooler/condenser **38**, for heating a tail gas stream with the heat from the NOₓ gas/steam mixture **15** coming from the ammonia converter **37**; into a production plant according to the production plant of the disclosure, is disclosed.

The method comprises the steps of introducing a supply for an oxygen-rich gas **50**, the oxygen-rich gas **50** being in fluid communication with compressed air **34**, the mixing of the oxygen-rich gas **50** and of compressed air **34** providing part of a first oxygen-containing gas **56**; introducing a supply for second oxygen-containing gas **60**, **61**, **67**, for supplying oxygen between the ammonia converter **37** and the absorption tower **41**, such that a tail gas stream **5, 52, 74, 76, 77** contains at least 0.5% by volume oxygen; introducing a means for regulating the concentration of oxygen in the ammonia converter **37** and/or of the ammonia gas stream **32**, particularly a means for controlling the flow of the oxygen-rich gas **50** and/or a means for controlling the flow of the ammonia gas stream **32**, for maintaining the oxygen to ammonia molar ratio inside the ammonia converter **37** at a ratio of at least 1.2; introducing a first means for splitting **55** and/or a second means for splitting **75** a tail gas stream, wherein (i) the first means of splitting **55** is configured to split a tail gas stream into a first tail gas stream **52** and a second tail gas stream **74**, and wherein the first tail gas stream is in fluid communication with the oxygen-rich gas **50** and compressed air **34**, thereby providing the first oxygen-containing gas **56**, and (ii) the second means of splitting **75** is configured to split a tail gas stream into a third tail gas stream **76** and a fourth tail gas stream **77**, and wherein the third tail gas stream is in fluid communication with the oxygen-rich gas **50** and compressed air **34**, thereby providing at least partly the second oxygen-containing gas **60**, **61**, **67**; and introducing a means for pressurising **53** a gas to a pressure P1 downstream the absorption tower **41**, or between the ammonia converter **37** and the absorption tower **41**, or in the first oxygen-containing stream **56** or in the ammonia/oxygen-containing gas mixture (**14**), such as to provide the first and/or the third tail gas stream **52**, **76** at a pressure P1.

As defined herein, an oxygen-rich gas is a gas comprising more than 21 vol% of oxygen, more in particular more than 30 vol%, more than 35 vol%, more than 40 vol%, more than 50 vol%, more than 60 vol%, more than 70 vol%, more than 80 vol%, more than 90 vol%, more than 95 vol%, more than 98 vol% and more than 99 vol%, more in particular 100 vol% of oxygen. An oxygen-rich gas can, for example, be provided by an air separation unit or by a water electrolyser.

As defined herein a tail gas heater is a heat exchange system comprising one or more heat exchanger units. In the case the heat exchanger is made of multiple heat exchanger units, the person skilled in the art will realise that it is possible to split the stream of tail gas downstream the absorption tower **41** inside the tail gas heater **43**.

As defined herein, a tail gas stream is any gas stream provided downstream the absorption tower, between the absorption tower **41** and the communication between the first tail gas stream **52** and the oxygen-rich gas **50**.

As defined herein, a means for splitting is any means suitable for splitting a tail gas stream such as to generate, e.g. a first tail gas stream **52** and a second tail gas stream **74**, or a third tail gas stream **76** and a fourth tail gas stream **77**. In particular, the means for splitting is a T-connection having one inlet and two outlets, such that a gas flowing through the inlet of the T-connection is splitted into two gas streams of identical chemical composition.

As defined herein, a means for pressurising is any suitable means for increasing the pressure of a gas stream. In particular, the means for pressurising is a gas compressor or a gas ejector. The person skilled in the art will realise that the means for splitting can be incorporated inside the means for pressurising, provided that the means for pressurising includes at least two outlets for the gas stream being pressurised.

As defined herein, a means for regulating the concentration of ammonia and/or of oxygen is any means for suitable for achieving a target concentration of ammonia and/or of oxygen. In particular, such means are gas flow control means, in particular a flow control valve or an orifice or a guide vane, for controlling the flow of the oxygen-rich gas **50** and/or of the ammonia gas stream **32**. In particular, the means is an integrated process control system, in which the concentration of oxygen is measured and the target flow of oxygen is thereby determined and achieved from controlling the flow of the oxygen-rich gas **50**. The oxygen concentration can also be determined from computing, by using the oxygen concentration of the oxygen-rich gas **50**, the flow at which the oxygen-rich gas **50** and of the ammonia gas stream **32** are introduced in the system, and the relative flow values at which the oxygen-rich gas **50** and the ammonia gas stream **32** are mixed.

Typically, P1 ranges from 2 to 16 bara. The person skilled in the art will determine the optimal concentrations of oxygen in the gases entering the ammonia converter **37** and the absorption tower **41**, in order for the catalytic conversion of ammonia to nitric oxide to proceed optimally in the ammonia converter **37** and for the absorption of NOₓ gases in the absorption tower **41** to proceed optimally. The person skilled in the art will also weigh out the benefits of increasing the oxygen content in the absorption tower **41**, namely a reduced tower size due to improved absorption, against the drawback of a higher gas volume downstream the absorption tower **41**, which implies equipment, such as heat exchangers, of a larger size, for heating tail gas.

### Examples

### 1. Recirculation of tail-qas at 40%

Reference is made to Figure 3. Ambient air **4** was compressed in an air compressor **36**, providing compressed air **34**. Ammonia **32** was mixed with compressed air **34** in a mixing apparatus **35**. The oxygen to ammonia molar ratio inside the mixing apparatus **35** was at least 1.2. The resulting ammonia/ air mixture **14** was fed to an ammonia converter **37**, at a temperature ranging from 800 to 950 °C and operating at a pressure of 6.2 bar. In the ammonia converter **37**, ammonia was oxidized over a mixed platinum/rhodium catalyst, thus obtaining a NOₓ gas/steam mixture **15**, comprising water and nitric oxide (NO). The heat energy of the mixture coming out of the ammonia converter was recovered using a steam turbine **51**, and also by heating the tail gas **5** as will be described below. The NOₓ gas/stream mixture was subsequently cooled down in a water cooler/condenser **38** to temperature where the water condenses, and an aqueous diluted nitric acid mixture **17** was separated from a gaseous NOₓ stream and was directed to an absorption tower **41**. Subsequently, the gaseous NOₓ stream was further oxidized to further convert the NO to NO₂ and N₂O₄, thereby producing a gaseous NOₓ stream **22** which was directed to the absorption tower **41** too. Inside the absorption tower **41**, the NOₓ gas reacted with water to produce the tail gas **5** and a stream of raw nitric acid **27**. The heat from the gaseous NOₓ stream **15** was used for heating the tail gas **5** in the tail gas heater **43** to 450 °C, providing a heated tail gas. The heated tail gas stream **5** was then splitted over a T-tube **55**. Following splitting in the T-tube, 40% of the heated tail gas was pressurised using a gas compressor **53** and then mixed with compressed air **34** and an oxygen-rich gas **50**. The resulting compressed tail gas **52**/oxygen-rich **50**/compressed air **34** mixture was mixed with ammonia **32** in the mixing apparatus **35** and the steps subsequent to mixing in the mixing apparatus **35** described above were repeated. The oxygen to ammonia molar ratio inside the mixing apparatus **35** was at least 1.2. The residual 60% of heated tail gas was sent to the tail gas expander **7**. The residual NOₓ gas in the raw nitric acid stream **27** was then stripped out with a gaseous medium **60** that was oxygen produced by a water electrolyser **66**, inside a bleacher unit **57**. The bleacher unit **57** was generally operated at about the same pressure as the ammonia converter of 6.2 bar and provided the oxygen-rich gas **50** and oxygen between the ammonia converter **37** and the absorption tower **41**, such that the concentration of oxygen in the tail gas **5** was at least 0.5% by volume. The drive power for the air compressor **36** and the gas compressor **53** originated from the tail gas expander **7** and the steam turbine **51**. The net power associated to the air compressors **36** and **53** and the tail gas expander **7** and the steam turbine **51** was 77 kW/h/t 100% HNO₃. This power was provided by the steam turbine **51**.

In a similar manner, upon recycling 65% of the tail gas, the net power associated to the air compressors **36** and **53** and the tail gas expander **7** and the steam turbine **51** was 68 kW/h/t 100% HNO₃.

### 2. Comparative example: no recirculation of tail-qas

Reference is made to Figure 1. Ambient air **4** was compressed in an air compressor **36**, providing compressed air **34**. Ammonia **32** was mixed with compressed air **34** in a mixing apparatus **35**. The oxygen to ammonia molar ratio inside the mixing apparatus **35** was at least 1.2. The resulting ammonia/ air mixture **14** was fed to an ammonia converter **37**, at a temperature ranging from 800 to 950 °C and operating at a pressure of 5.2 bar. In the ammonia converter **37**, ammonia was oxidized over a mixed platinum/rhodium catalyst, thus obtaining a NOₓ gas/steam mixture **15**, comprising water and nitric oxide (NO). The heat energy of the mixture coming out of the ammonia converter was recovered using a steam turbine **51**, and also by heating the tail gas **5** as will be described below. The NOₓ gas/stream mixture was subsequently cooled down in a water cooler/condenser **38** to a temperature where the water condenses, and an aqueous diluted nitric acid mixture **17** was separated from a gaseous NOₓ stream and was directed to an absorption tower **41**. Subsequently, the gaseous NOₓ stream was further oxidized to further convert the NO to NO₂ and N₂O₄, thereby producing a gaseous NOₓ stream **22** which was directed to the absorption tower **41** too. Inside the absorption tower **41**, the high pressure NOₓ gas reacted with water to produce the tail gas **5** and a stream of raw nitric acid **27** containing residual NOₓ gas. The heat from the gaseous NOₓ stream **15** was used for heating the tail gas **5** in the tail gas heater **43** to 450 °C. The entire tail gas stream **5** was sent to the tail gas expander **7**. The residual NOₓ gas in the raw nitric acid stream **27** was then stripped out with compressed air **34** inside a bleacher unit **57** which was generally operated at about the same pressure as the ammonia converter, 5.2 bar. The drive power for the air compressor **36** originated from the tail gas expander **7** and the steam turbine **51**. The net power associated to the air compressor **36**, and the tail gas expander **7** was 153 kW/h/t 100% HNO₃. This power was produced by the steam turbine **51**.

Therefore, when compared to the example 1, a net power of 76 kWh/t 100% HNO₃ (50%) was saved upon recirculating 40% of the tail gas.

Therefore, when compared to the example 1, a net power of 85 kWh/t 100% HNO₃ (55%) was saved upon recirculating 65% of the tail gas.

## Claims

1. A production plant for producing nitric acid at reduced power consumption and reduced emissions comprising:
• an air compressor **(36)** providing compressed air **(34)**;
• a supply for an oxygen-rich gas **(50)**, the oxygen-rich gas **(50)** being in fluid communication with compressed air **(34)**, the mixing of the oxygen-rich gas **(50)** and of compressed air **(34)** providing part of a first oxygen-containing gas **(56)**;
• a mixing apparatus **(35)**, for mixing the first oxygen-containing gas **(56)** with an ammonia gas stream **(32)**, to produce an ammonia/oxygen-containing gas mixture **(14)**;
• an ammonia converter **(37)** operable at a pressure P1, for oxidising ammonia in the ammonia/oxygen-containing gas mixture **(14)**, to produce a NOₓ gas/steam mixture **(15)** comprising water and nitric oxide;
• a means for regulating the concentration of ammonia and/or of oxygen in the ammonia converter **(37)**, particularly a means for controlling the flow of the oxygen-rich gas **(50)** and/or a means for controlling the flow of the ammonia gas stream **(32)**, for maintaining the oxygen to ammonia molar ratio inside the ammonia converter **(37)** at a ratio of at least 1.2;
• a gas cooler/condenser **(38)** downstream the ammonia converter **(37)**, to produce an aqueous diluted nitric acid mixture **(17)** and a gaseous NOₓ stream **(22)**;
• an absorption tower **(41)**, downstream the gas cooler/condenser **(38)**, for absorbing the NOₓ gases from the gaseous NOₓ stream **(22)** in water, to produce a stream of raw nitric acid containing residual NOₓ gas **(27)** and a tail gas **(5)** comprising NOₓ gases, comprising an absorption tower tail gas outlet **(6)** for evacuating the tail gas **(5)**; and
• a supply for a second oxygen-containing gas **(60**, **61**, **67)**, for supplying oxygen to a NOₓ gas containing stream between the ammonia converter **(37)** and the absorption tower **(41)**, such that a tail gas stream **(5, 52, 74, 76, 77)** contains at least 0.5% by volume oxygen;
• a tail gas heater **(43)**, positioned upstream from the gas cooler/condenser **(38)**, for heating a tail gas stream with the heat from the NOₓ gas/steam mixture **(15)** coming from the ammonia converter **(37)**;
**characterised in that** the production plant further comprises:
• a first and/or second means for splitting a gas stream wherein:
(i) the first means for splitting **(55)** is a means for splitting a tail gas stream into a first tail gas stream **(52)** and a second tail gas stream **(74)**, and wherein the first tail gas stream **(52)** is in fluid communication with the oxygen-rich gas **(50)** and compressed air **(34)**, and wherein the mixing of compressed air **(34)**, the first oxygen-rich gas **(50)** and the first tail gas stream **(52)** provides the first oxygen-containing gas **(56)**; and
(ii) the second means for splitting **(75)** is a means for splitting a tail gas stream **(5)** into a third tail gas stream **(76)** and a fourth tail gas stream **(77)**, and wherein the third tail gas stream **(76)** is in fluid communication with compressed air **(34)** and with the oxygen-rich gas **(50)**, and wherein the mixing of compressed air **(34)**, the oxygen-rich gas **(50)** and the third tail gas stream **(76)** provides at least partly the second oxygen-containing gas **(60**, **61, 67)**; and
• a means for pressurising **(53)** a gas, located downstream the absorption tower **(41)**, or between the ammonia converter **(37)** and the absorption tower **(41)**, or upstream the ammonia converter **(37)** in the first oxygen-containing gas **(56)** or in the ammonia/oxygen-containing gas mixture **(14)**, to provide the first and/or the third tail gas stream **(52**, **76)** at a pressure P1.

2. The production plant according to claim 1, further comprising a means for controlling the flow of the first and/or the third tail gas stream **(52**, **76)**.

3. The production plant according to any one of claims 1 to 2, further comprising one or more of:
• a heat exchanger **(73)**, for exchanging heat between a tail gas stream **(77)** downstream the absorption tower **(41)** and the stream of heated tail gas exiting the tail gas heater **(43)**, wherein:
(i) the tail gas stream having exchanged heat with the stream of heated tail gas is supplied to the first means for splitting **(55)** downstream the heat exchanger **(73)**, and wherein the means for pressurising **(53)** are located upstream the heat exchanger **(73)**; and/or
(ii) the tail gas **(5)** at the outlet **(6)** of the absorption tower **(41)** is splitted into a third tail gas stream **(76)** and a fourth tail gas stream **(77)**;
• a De-NOₓ treatment unit **(71)**; and
a steam turbine **(51)**, wherein the steam turbine can at least partly power the means for pressurising **(53)**.

4. The production plant according to any one of claims 1 to 3, further comprising a bleacher **(57)** comprising an inlet **(58)** for an oxygen-rich bleaching gas **(60)**, an inlet **(64)** for the stream of raw nitric acid containing residual NOₓ gas **(27)**, an outlet **(59)** for bleached nitric acid **(63)** and an outlet **(65)** for off-gases **(61)**, wherein the off-gases **(61)** are in fluid communication with a gas stream between the ammonia converter **(37)** and the absorption tower **(41)**, such that the second oxygen-containing gas **(67)** comes at least partly from the off-gases **(60**, **61)**.

5. The production plant according to any one of claims 1 to 4, wherein the oxygen-rich gas **(50)**, the second oxygen-containing gas **(67)**, the oxygen-rich bleaching gas **(60)** and the oxygen-rich off-gases **(61)** are provided at least partly by a high-pressure water electrolyser **(66)**.

6. The production plant according to any one of claims 1 to 5, further comprising a tail gas expander **(7)** for expanding the second tail gas stream **(74)** to atmospheric pressure, to produce an expanded tail gas **(70)**, wherein the means for pressurising **(53)** can be powered at least partly by the tail gas expander **(7)** or by the steam turbine **(51)** or by a power source.

7. A method for producing nitric acid at reduced power consumption and reduced emissions, in a production plant according to any one of claims 1 to 6, comprising the steps of:
a) compressing air in the air compressor **(36)**, thereby providing compressed air **(34)**;
b) supplying compressed air **(34)** obtained in step a) to the mixing apparatus **(35)**;
c) supplying the ammonia gas stream **(32)** to the mixing apparatus **(35)**, thereby producing the ammonia/oxygen-containing gas mixture **(14)**;
d) oxidising ammonia in the ammonia/oxygen-containing gas mixture **(14)** in the ammonia converter **(37)** at a pressure P1, thereby producing the gaseous NOₓ gas/steam mixture **(15)** comprising water and nitric oxide;
e) separating and condensing steam in the gas cooler/condenser **(38)**, thereby generating the aqueous diluted nitric acid mixture **(17)** and the gaseous NOₓ stream **(22)**;
f) absorbing the gaseous NOₓ stream **(22)** in the absorption tower **(41)**, thereby producing the stream of raw nitric acid containing residual NOₓ gas **(27)** and the tail gas **(5)** comprising NOₓ gases; and
g) heating the tail gas **(5)** in the tail gas heater **(43)** to a temperature up to 650 °C with the gaseous NOₓ gas/steam mixture **(15)**;
**characterised in that** the method further comprises the steps of:
h) pressurising a gas stream located downstream the absorption tower **(41)**, or anywhere between the ammonia converter **(37)** and the absorption tower **(41)**, or upstream the ammonia converter **(37)** in the first oxygen-containing stream **(56)** or in the ammonia/oxygen-containing gas mixture **(14)**, to a pressure P1 with the means for pressurising **(53)**;
i) splitting a stream of tail gas downstream the absorption tower **(41)** with the first means for splitting into the first tail gas stream **(52)** and the second tail gas stream **(74)** and/or with the second means for splitting into the third tail gas stream **(76)** and the fourth tail gas stream **(77)**;
j) mixing the first tail gas stream **(52)** with the oxygen-rich gas **(50)** and compressed air **(34)**, thereby providing the first oxygen-containing gas **(56)**, and/or mixing the third tail gas stream (**76**) with the oxygen-rich gas (**50**) and compressed air (**34**), thereby providing at least partly the second oxygen-containing gas (**60**, **61**, **67**);
k) adjusting the flow of the oxygen-rich gas (**50**) being mixed in step j) or the flow of the ammonia gas stream (**32**), such as to maintain the oxygen to ammonia molar ratio inside the ammonia converter (**37**) at a ratio of at least 1.2;
I) supplying the first oxygen-containing gas (**56**) to the mixing unit (**35**);
m) adjusting the flow of the second oxygen-containing gas (**60**, **67**), such that a tail gas stream (**5**, **52**, **74**, **76**, **77**) contains at least 0.5% by volume oxygen; and
n) supplying the second oxygen-containing gas (**60**, **61**, **67**).

8. The method according to claim 7, further comprising the step of:
o) adjusting the flow of the first and/or the third tail gas stream (**52**, **76**).

9. The method according to any one of claims 7 to 8, wherein, in step h), the tail gas (**5**) obtained from step f) is pressurised in the means for pressurising (**53**), and wherein, in step i), the tail gas stream is splitted into a first tail gas stream (**52**) and a second tail gas stream (**74**), and wherein the method further comprises the steps of:
p) after step f) and before step g), heating the tail gas (**5**) with the tail gas to be splitted in step i), in the heat exchanger (**73**), thereby bringing the tail gas to be mixed in step j) to a temperature below 300 °C;
q) treating the tail gas in the De-NOₓ treatment unit (**71**) before step g) and after step p); and
r) recovering at least part of the heat energy generated in the ammonia converter (**37**) in a steam turbine (**51**).

10. The method according to any one of claims 7 to 9, wherein, in step h), the tail gas (**5**) obtained from step f) is pressurised in the means for pressurising (**53**), and wherein, in step i), the pressurised tail gas obtained from step h) is splitted into a third tail gas stream (**76**) and a fourth tail gas stream (**77**).

11. The method according to any one of claims 7 to 10, further comprising the step of: s) bleaching the stream of raw nitric acid containing residual NOₓ gas **(27)** obtained in step
f) in the bleacher **(57)**, thereby producing the bleached nitric acid **(63)**.

12. The method according to any one of claims 7 to 11, further comprising the steps of:
t) operating the high-pressure water electrolyser **(66)**, thereby producing pressurized oxygen; and
u) providing, from the oxygen produced by the water electrolyser **(66)** in step t), at least part of the oxygen-rich gas **(50)**, the second oxygen-containing gas **(67)**, the oxygen-rich bleaching gas **(60)** and the oxygen-rich off-gases **(61).**

13. The method according to any one of claims 7 to 12, further comprising the step of:
v) expanding the second tail gas stream **(74)** in the tail gas expander **(7)** to atmospheric pressure, thereby producing the expanded tail gas **(70)**.

14. The use of the production plant according to any one of claims 1 to 6 for performing the method according to any one of claims 7 to 13.

15. A method for revamping a production plant for producing nitric acid, comprising:
• an air compressor **(36)** for providing compressed air **(34)**;
• a mixing apparatus **(35)** for mixing compressed air **(34)** with an ammonia gas stream **(32)**, to produce an ammonia/oxygen-containing gas mixture **(14)**;
• an ammonia converter **(37)**, for oxidising ammonia in the ammonia/oxygen-containing gas mixture **(14)**, to produce a NOₓ gas/steam mixture **(15)** comprising water and nitric oxide;
• a gas cooler/condenser **(38)** downstream the ammonia converter **(37)**, to produce an aqueous diluted nitric acid mixture **(17)** and a gaseous NOₓ stream **(22)**;
• an absorption tower **(41)**, downstream the gas cooler/condenser **(38)**, for absorbing the NOₓ gases from the gaseous NOₓ stream **(22)** in water, to produce a stream of raw nitric acid containing residual NOₓ gas **(27)** and a tail gas **(5)** comprising NOₓ gases, comprising an absorption tower tail gas outlet **(6)** for evacuating the tail gas **(5)**; and
• a tail gas heater (**43**), positioned upstream from the gas cooler/condenser (**38**), for heating a tail gas stream with the heat from the NOₓ gas/steam mixture (**15**) coming from the ammonia converter (**37**);
into a production plant according to any one of claims 1 to 7, comprising the steps of:
• introducing a supply for an oxygen-rich gas (**50**), the oxygen-rich gas (**50**) being in fluid communication with compressed air (**34**), the mixing of the oxygen-rich gas (**50**) and of compressed air (**34**) providing part of a first oxygen-containing gas (**56**);
• introducing a supply for second oxygen-containing gas (**60**, **61**, **67**), for supplying oxygen between the ammonia converter (**37**) and the absorption tower (**41**), such that a tail gas stream (**5**, **52**, **74**, **76**, **77**) contains at least 0.5% by volume oxygen;
• introducing a means for regulating the concentration of oxygen in the ammonia converter (**37**) and/or of the ammonia gas stream (**32**), particularly a means for controlling the flow of the oxygen-rich gas (**50**) and/or a means for controlling the flow of the ammonia gas stream (**32**), for maintaining the oxygen to ammonia molar ratio inside the ammonia converter (**37**) at a ratio of at least 1.2;
• introducing a first means for splitting (**55**) and/or a second means for splitting (**75**) a tail gas stream, wherein:
(i) the first means of splitting (**55**) is configured to split a tail gas stream into a first tail gas stream (**52**) and a second tail gas stream (**74**), and wherein the first tail gas stream is in fluid communication with the oxygen-rich gas (**50**) and compressed air (**34**), thereby providing the first oxygen-containing gas (**56**); and (ii) the second means of splitting (75) is configured to split a tail gas stream into a third tail gas stream (76) and a fourth tail gas stream (77), and wherein the third tail gas stream is in fluid communication with the oxygen-rich gas (50) and compressed air (34), thereby providing at least partly the second oxygen-containing gas (60, 61, 67); and
• introducing a means for pressurising (53) a gas to a pressure P1 downstream the absorption tower (41), or between the ammonia converter (37) and the absorption tower (41), or in the first oxygen-containing stream (56) or in the ammonia/oxygen-containing gas mixture (14), such as to provide the first and/or the third tail gas stream (52, 76) at a pressure P1.
